# EUROPEAN PATENT APPLICATION

(11) **EP 1 591 210 A1**
(43) Date of publication of application: **02.11.2005**
(21) Application number: 05009050.5
(22) Date of filing: 25.04.2005
(51) Int. Cl.: B25J 19/00

(54) **Industrial robot having a tool with wireless communication means and autonomous electric-power source**

(30) Priority: 29.04.2004 IT TO20040266
(71) Applicant: COMAU SpA, 10095 Grugliasco (Torino) (IT)
(72) Inventor: Deplano, Stefano, 10134 Torino (IT)
(74) Representative: Gallarotti, Franco

(57) **Abstract**

An industrial robot (1) comprises:
- an articulated structure (2, 3, 5, 7, 10), which can move according to a number of axes for translating a tool (13) that comprises functional components of an electrical type (22, 24, 25, 26), provided for executing programmed operations;
- an electronic control unit (15, 30), provided for managing both the movement of the structure of the robot (1) and the operation of the tool (13).

According to the invention, the tool (13) is equipped with an autonomous electric-power source (23), such as a battery, for supplying both the functional components (22, 24, 25, 26) and an electronic control circuit (28) for controlling the components themselves, and the control circuit (28) is in signal communication with the control unit (15, 30) in wireless mode, for the purposes of controlling the operation of the functional components (22, 24, 25, 26).

## Description

The present invention relates to industrial robots of the type comprising a structure having a plurality of movable elements and an electronic control system.

Some types of industrial robots must be able to execute complex movements and for said purpose their structure consists of various mutually articulated elements with ample possibility of movement (the most widespread structure of anthropomorphic robot has, for example, at least six points of articulation). Every displacement of position of a tool or other functional device corresponds to a movement of one or more elements of the structure of the robot according to a respective axis of rotation.

Along the structure of the robot there usually extends wiring and/or piping of different types, and in particular:
- power cables, provided for supplying the motors that produce the movements of the robot;
- control cables, used for managing operation of the robot and its displacements; and
- process cables and/or pipes for the tool or other functional device moved by the robot, such as electrical cables, ducts and pipes for compressed air or other fluids, etc.

Normally, the power cables and control cables are arranged within the structure of the robot, gathered into bundles and adequately protected, whilst the process cables/pipes are arranged at least in part outside the robot.

For example, the devices for executing manipulations or similar activities require installation on board the structure of the robot of a bundle of process cables/pipes that start from the so-called shoulder (axis 3 of the robot) and must reach the device mounted on the flange of the wrist of the robot (axis 6 of the robot). The aforesaid ducts are typically provided for supplying compressed air to at least one pneumatic device, such as for example a gripping hand or the like. The aforesaid cables comprise, instead, at least one signal and supply cable (in general 24 Vdc) for control of the pneumatic device, as well as one or more possible further signal cables for sensors of various nature, such as sensors for detecting the presence of a piece, sensors for detecting the position of the actuators, vision sensors, measuring laser sensors, etc.

In order to arrange the process cables/pipes along the outer structure of the robot there have been proposed appropriate suspension devices, usually based upon the use of a flexible tubular guide duct, within which the bundle of the aforesaid cables/pipes is gathered and for the most part protected.

It should be noted that the problem of guiding the process cables/pipes is particularly critical in the case of anthropomorphic robots, in which the forearm can rotate about its own longitudinal axis. In such cases, the tubular guide duct must be able to wind about the forearm when this turns about its longitudinal axis.

For said purpose, the length of the process cables/pipes exceeds the effective distance between the shoulder of the robot and the tool or functional device in order to form a sort of volute, the dimensions of which vary according to the posture assumed by the robot.

In order to cause the extension of the aforesaid volute to adapt to the movements of the robot there have been proposed elastic return arms, actuated via a spring, for example as described in DE-U-92 17 659, EP-A-0 144 602, and EP-A-1 179 397.

In other solutions, instead of a return arm there is provided a tubular device for elastic tensioning, which is associated to the guide duct and surrounds it at least in part. Examples of said technique are described, for example, in DE-U-94 06 405, EP-A-0 929 766, and EP-A-0 950 478.

To anchor the duct containing the bundle of process cables/pipes along the structure of the robot, enabling, at the same time, its necessary axial sliding, there are usually provided appropriate collars (see, for example, US-A-6,293,504).

The tubular protection and guide duct for the process cables/pipes, which extends between the shoulder (axis 3) and the flange (axis 6) of the robot, is of non-negligible encumbrance and the position of its anchorages must be adjusted each time in order to adapt as well as possible to the activity that the robot must perform. In addition to this, the working and movement cycle of the robot must be studied so as to prevent the guide duct or parts of the cables/pipes external to the latter from touching both the structure of the robot, and hence causing wear, and elements external to the robot that can exert a cutting or in any case wearing action. This has a significant effect on the service life of the bundle of cables and of the guide duct, which in any case is not usually very long (from six months to one year) and depends to a great extent upon the working cycle of the robot and upon the skill of the operator who has adopted solutions in setting up the robot aimed at preventing any rubbing against various surfaces. In an attempt to protect the duct from wear due to its sliding on surfaces of the robot, it has been proposed to associate to the duct itself, in the positions deemed critical, appropriate anti-abrasion buffers (see, for example, EP-A-1 060 057 and US-A-6,352,369).

It should, however, be pointed out that it is extremely difficult to obtain a realistic prior simulation of the positions of encumbrance and of work that the guide duct and the cables/pipes will assume in the course of effective use of the robot. On this point, it should be recalled that the final set-up is made in field by an operator and that the behaviour of the bundle of cables/pipes is not exactly deterministic.

The main purpose of the present invention is to overcome the aforesaid drawbacks.

With a view to achieving said purpose, the subject of the invention is an industrial robot having:
- a structure comprising two or more movable elements;
- a functional device or tool supported by an element of the structure of the robot, such as a wrist device, for being translated in order to execute programmed operations, the tool comprising one or more functional components of an electrical type for executing said programmed operations; and
- an electronic control system operative for controlling the movement of the structure of the robot and controlling the tool,
said industrial robot being characterized in that it is equipped with an autonomous electric-power source operative for supplying both said functional component or components and an electronic control circuit for controlling said component or components, said control circuit being in signal communication with said control system in wireless mode for the purposes of control of operation of the tool.

As will emerge clearly from what follows, the use of a tool equipped with a supply source of its own, with a system for data exchange in wireless mode with the unit that supervises operation of the robot, as well as with actuator means of an electrical type, enables both electrical connections and pneumatic connections to be avoided, for example along the forearm and the wrist of the robot, thus overcoming the problems of the prior art.

The preferred characteristics of the invention are specified in the annexed claims, which are to be understood as forming an integral part of the present description.

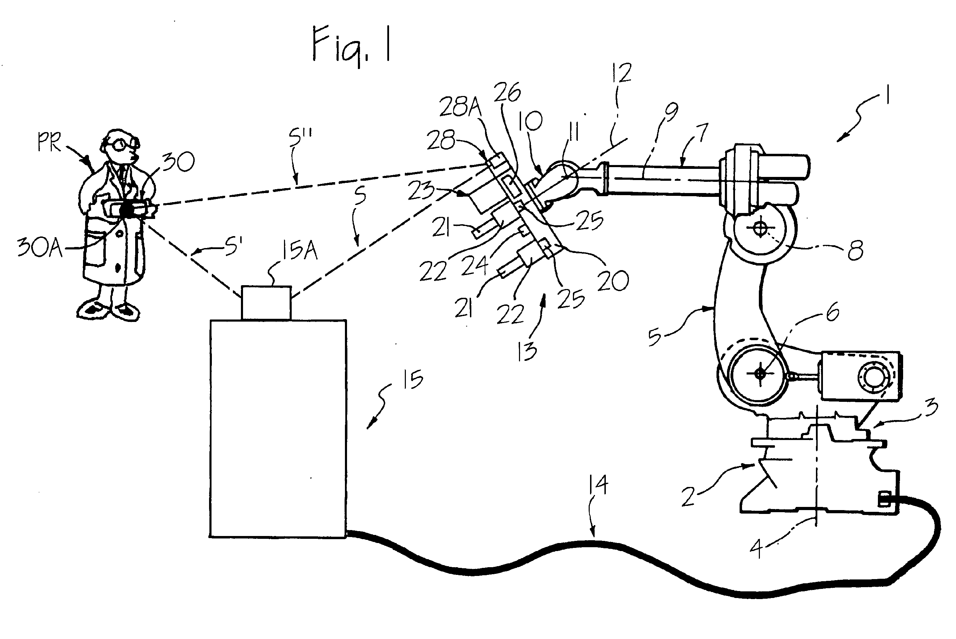

Further characteristics and advantages of the invention will emerge from the ensuing description with reference to the drawings, which are provided purely by way of non-limiting example and in which Figure 1 is a schematic view of an industrial robot according to the invention.

In Figure 1, the reference number 1 designates as a whole an industrial robot of an anthropomorphic type according to the invention, comprising a base 2, fixed to a floor, and a column 3, which is mounted in a rotatable way on the base 2 about a first axis 4 directed vertically. The reference number 5 designates an arm mounted oscillating, on the supporting structure formed by the column 3, about a second axis 6 directed horizontally. The reference number 7 designates a forearm mounted on the arm 5 about a third axis 8, also directed horizontally. The forearm 7 moreover has the possibility of rotating about its axis 9, which consequently forms a fourth axis of movement of the robot 1, and is equipped at its end with a wrist device 10, comprising two movable parts, with the possibility of rotation about respective axes 11, 12, which are mutually perpendicular. At the terminal part of the wrist 10, or flange, there is associated a tool or functional device, built according to the teachings of the invention and designated as a whole by 13.

According to a technique in itself known, the movement of each of the movable parts 3, 5, 7 and 10 of the robot 1 is controlled by a respective electric motor (not illustrated) with respective reduction-gear drive (not illustrated either). The supply of power for the aforesaid electric motors for movement of the robot 1 is through usual electrical cables, which extend for the most part within the structure of the robot and are gathered in a bundle. A part of said bundle of cables, designated by 14 in Figure 1, extends instead on the outside of the structure of the robot 1.

The movements of the robot 1 are controlled via an electronic control unit, which is designed according to general criteria that are substantially known and is designated as a whole by 15 in Figure 1, said control unit being located in remote and static position with respect to the robot 1.

According to the principal aspect of the present invention, the tool or functional device 13 designed for executing the operations for which the robot 1 is provided is supplied and controlled in the absence of the usual process wiring and pipes typical of the known art.

For said purpose, in the preferred embodiment of the invention, the device 13 is equipped with an autonomous electric-power source, such as a battery, that provides the electric supply necessary to the active components of the device itself, which basically consist of actuators and/or sensors of various nature. On the other hand, control of the operation of the device 13, i.e., the exchange of signals between its active components and the control unit 15, is obtained in a wireless mode, i.e., in the absence of any form of physical wiring.

In the case exemplified in the figure, the device 13 is a tool (gripper) for handling or gripping pieces, comprising a framework 20 fixed to the wrist 10, to which there are associated one or more gripping hands 21, of a type in itself known, actuated via respective electrical actuators 22.

Provided in the framework 20 is a housing or seat for a battery 23, designed to supply electric power to the aforesaid actuators 22, as well as to other electrical/electronic components (24-26, 28) of the tool or device 13; said electric power is supplied by the battery 23 to the electrical components 22, 24-26, 28 via usual electrical conductors, which are not represented in the figure for reasons of greater clarity.

Associated to the framework 20 is a container for a control circuit 28 of the device 13, from which there come out conductors for carrying commands (not represented) to the actuators 22, as well as to possible sensors of various nature associated to the device itself, such as, for example, sensor means 24 for detecting the presence of a piece or for measuring, sensor means 25 for detecting the position of the actuators 22, sensor means for viewing or filming 26, etc.

The control unit 15 and the control circuit 28 each comprise means for exchange of signals via ether, designated, respectively, by 15A and 28A, said means being sized so as to have a useful range of some metres and hence falling within the range of action of the device 13 with respect to the control unit 15 of the robot 1.

The exchange of signals, represented schematically by the dashed line S in Figure 1, may be bi-directional, in which case the means 15A and 28A are of the transceiver type. It is to be noticed, in fact, that the circuit 28 may both receive control information from the unit 15 for the purpose of actuating the actuators 22 and send to the unit 15 information regarding detections made by the sensor means 24-26 (when envisaged). On the other hand, the unit 15 may both send the aforesaid control information to the device 13 and receive from the latter the aforesaid sensing information, if the sensors 24-26 are provided.

In general terms, the methodology and logic of transmission/reception of the data exchanged via the means 15A, 28A can be of any known type. It should, on the other hand, be considered that said data must be exchanged between the unit 15 and the circuit 28 in a secure way, i.e., without any interference that could give rise, for example, to undesired actuation of the device 13 or else to false data in the detections made by its possible sensors (on this point it should be recalled that, in the working environment in which a robot operates, there may be present other signals transmitted via ether, or else electromagnetic waves which potentially give rise to disturbance, with consequent risks of interference). In such a perspective, the secure technique of communication of information regarding the operation of the device 13 can be of any known type. Likewise, the exchange of data between the transceiver means 15A and 28A can occur using any wireless transmission protocol, preferably of the type in which the transmission of the information is of a radiofrequency (RF) type.

In the preferred embodiment of the invention, the battery or electrical accumulator 23 is of a rechargeable type, where recharging can be carried out during working pauses of the robot 1. In order to reduce the periods of inactivity of the robot 1, the battery 23 can also be of an automatically replaceable type. In such a perspective, the robot 1 may be programmed for executing in appropriate times a cycle of replacement of the battery 23, which is in this case inserted in a removable way in the respective seat (in the course of the aforesaid cycle, for example, the robot 1 autonomously deposits the battery being used in a purposely provided recharging station, and picks up therefrom a previously recharged one).

As may be appreciated, the use of a functional device 13 supplied via an autonomous power source 23, of a system for data exchange 15A, 28A in wireless mode, and of actuator means of an electrical type 22 enables prevention of both electrical connections and pneumatic connections along the forearm and the wrist of the robot 1.

The proposed solution thus enables precise execution of simulations of operation of the robot 1, necessary for the purposes of its programming, without the degree of uncertainty typical of the prior art that depends upon possible undesirable variations in the positioning of the process cables/pipes and of the corresponding guide duct.

According to the invention, likewise eliminated is the problem of the low service life of the cables/pipes and of the respective guide duct, with a consequent considerable increase in the reliability of the system. The robot according to the invention is finally distinguished by smaller overall dimensions, so that its forearm can penetrate in a nimbler way into restricted areas such as inside a car body.

Of course, without prejudice to the principle of the invention, the details of construction and the embodiments may vary widely with respect to what is described and illustrated herein purely by way of example.

According to a possible variant of the invention, the means for data exchange 15A, 28A in wireless mode described previously can be exploited also for the purposes of use of a "teach pendant ", i.e., a portable programming terminal used for manual control of a robot, in order to identify the optimal points of the path for a robot point and to store the corresponding co-ordinates, in order to allow the robot to repeat subsequently, in an automatic way, said path to carry out a certain operation. For this purpose, the teach pendant is operatively connected to the control unit of the robot and typically comprises a display and a set of pushbuttons, which are used for the programming and manual control of the robot.

The teach pendant is usually connected to the control unit by means of a cable, of sufficient length as to enable the operator responsible for programming to move in the proximity of the working area of the robot, in order to be able to verify accurately the various working points and the paths. The aforesaid cable, however, only allows a limited manoeuvrability of the operator in his activity of programming in the vicinity of the robot, since he must move about continuously around the robot itself.

In order to overcome the above drawback, in a possible variant of the invention, also the teach pendant is operatively connected in wireless mode to the control unit 15 of the robot 1, exploiting the presence of the means 15A that equip the latter.

For the above purpose, in Figure 1 the reference number 30 designates a portable terminal or teach pendant, used by an operator PR for programming the robot 1. The terminal 30 is equipped with respective means of exchange of signals via ether, designated by 30A in Figure 1, which are able to co-operate with the means 15A of the unit 15. Via the means 30A, 15A, the terminal 30 can, for example, send to the unit 15 information regarding the co-ordinates of the robot axes, commands for movement thereof, data of downloading of software, information on the state of a device for emergency arrest and/or on a device for enabling use of the terminal (the so-called "enabling device"), etc. The exchange of signals between the means 30A and 15A, which is represented schematically by the dashed line S' in Figure 1, can in any case be of a bi-directional type, where the data sent by the unit 15 to the terminal 30 can, for example, regard information necessary for updating display windows on the terminal itself, various signalling codes (alarms, machine states), data on uploading of programs, etc.

In combination with or as an alternative to the embodiment just described, the terminal 30 can be operatively connected in wireless mode to the control circuit 28 of the tool 13. In this case, the means of exchange of signals via ether 30A of the terminal 30 are able to co-operate with the means 28A of the control circuit 28 of the tool 13 so as to be able to communicate with the latter, without necessarily having to occupy the unit 15 and the respective resources.

Via the means 30A, the terminal 30 can, for instance, send to the unit 15 commands for actuation of the actuators 22, commands for activation of the sensors 23-26, commands for downloading of software to the circuit 28, etc. Also in this case the exchange of signals between the means 30A and 28A, represented schematically by the dashed line S" in Figure 1, can be of a bi-directional type, where the data sent by the circuit 28 to the terminal 30 can, for example, regard information on readings made by the sensor means 24, 25, images sent by the vision sensor means 26, various signalling codes (alarms, state of actuators, state of battery), etc.

The invention has been described with reference to a manipulation or gripping device 13, but it is clear that it may also be used for creating other types of robot tools or functional devices, provided that there is an autonomous source of electrical supply, a wireless data-exchange system, and active components of an electrical/electronic nature.

In the same way, even though the invention has been described with reference to a robot of an anthropomorphic type, the invention may also be applied to other types of robot and manipulators, such as for example cartesian robots.

The battery 23 could possibly be associated to the forearm of the robot 1 and equipped with a system of fast connection between the battery itself and the tool 13 fixed to the wrist 10.

Finally, the electrical actuators 22 provided on the device 13 may be of various types (for example linear or rotary electric motors, solenoids, etc).

## Claims

1. An industrial robot (1) having:
- a structure comprising two or more movable elements (2, 3, 5, 7, 10);
- a functional device or tool (13) supported by an element (10) of the structure of the robot (1), such as a wrist device, for being translated for the purposes of execution of programmed operations, the tool (13) comprising one or more functional components of an electrical type (22, 24, 25, 26) for executing said programmed operations; and
- an electronic control system (15, 30), which is operative for controlling movement of the structure of the robot (1) and controlling the tool (13),
said industrial robot (1) being **characterized in that** it is equipped with an autonomous electric-power source (23) operative for supplying both said functional component or said functional components (22, 24, 25, 26) and an electronic control circuit (28) for controlling the components themselves, said control circuit (28) being in signal communication with said control system (15, 30) in wireless mode for the purposes of control of operation of the tool (13).

2. The robot according to Claim 1, **characterized in that** said control system (15, 30) and said control circuit (28) comprise respective means for exchange of signals via ether (15A, 28A, 30A).

3. The robot according to Claim 2, **characterized in that**:
- said control system (15, 30) comprises at least one of:
- an arrangement (15A, 30A) for transmission of signals for controlling operation of said functional component or said functional components (22, 24, 25, 26); and
- an arrangement (15A, 30A) for reception of signals generated by said functional component or said functional components (24, 25, 26),
- said control circuit (28) comprises at least one of:
- an arrangement (28A) for reception of control signals generated by said control system (15, 30); and
- an arrangement (28A) for transmission of signals generated by said functional component or said functional components (24, 25, 26).

4. The robot according to Claim 1, **characterized in that** the tool (13) comprises a respective framework (20) for supporting:
- said functional component or said functional components (22, 24, 25, 26);
- said autonomous electric-power source (23); and
- said control circuit (28).

5. The robot according to Claim 1, **characterized in that** said functional component or said functional components (22, 24, 25, 26) comprise at least one of electrical actuator means (22) and sensor means (24-26).

6. The robot according to Claim 1, **characterized in that** said autonomous electric-power source comprises at least one battery (23) of a rechargeable type.

7. The robot according to Claim 1, **characterized in that** said autonomous electric-power source comprises a battery (23) mechanically and electrically coupled in a removable way to a respective seat, where in particular said control system (15, 30) is programmed for managing a cycle of replacement of said battery (23).

8. The robot according to Claim 1, **characterized in that** said structure of the robot (1) comprises:
- a base (2) and a column (3) mounted on the base (2) to rotate about a first substantially vertical axis (4);
- an arm (5) mounted oscillating on the column (3) about a second axis (6);
- a forearm (7) mounted articulated on the arm (5) about a third axis (8) and with possibility of rotating about a respective fourth axis (9); and
- a wrist device (10; 10'), supported by the forearm (7) with possibility of rotation about at least two axes (11, 12; 11', 12'),
where said tool (13) is supported by the wrist device (10).

9. The robot according to Claim 1, **characterized in that** the tool is a device for manipulation of pieces (13) and **in that** said functional components (22, 24, 25, 26) comprise electrical actuator means (22) for one or more gripping hands (21).

10. The robot according to Claim 2, **characterized in that** exchange of signals via ether between said control system (15, 30) and said control circuit (28) is obtained via transmission/reception of radiofrequency signals.

11. The robot according to Claim 2, **characterized in that** said control system (15, 30) and said control circuit (28) comprise respective means (15A, 28A, 30A) for exchange of signals via ether with a secure communication technique.

12. The robot according to Claim 1, **characterized in that** said control system (15, 30) comprises a static electronic control unit (15), with which said control circuit (28A) is in signal communication in wireless mode.

13. The robot according to Claim 1, **characterized in that** said control system (15, 30) comprises a portable programming terminal or teach pendant (30), with which said control circuit (28A) is in signal communication in wireless mode.

14. The robot according to Claim 1, **characterized in that** said control system (15, 30) comprises a static electronic control unit (15) connected in wireless mode to a portable programming terminal or teach pendant (30), where at least one of said one static electronic control unit (15) and said portable programming terminal or teach pendant (30) is in signal communication in wireless mode with said control circuit (28).

15. The robot according to Claim 1, **characterized in that** said control system (15, 30) comprises a static electronic control unit (15) operatively connected to a portable programming terminal (30), and **in that** said control circuit (28A) is in signal communication in wireless mode both with said one control unit (15) and with said portable terminal (30).

16. A tool for an industrial robot, which is to be fixed to a movable element (10) forming part of a robot structure (1) comprising a plurality of movable elements (2, 3, 5, 7, 10), the tool (13) comprising one or more functional components of an electrical type (22, 24, 25, 26) for execution of programmed operations, said tool being **characterized in that** associated to the tool (13) is an autonomous electric-power source (23), such as a battery, which is operative for supplying both said functional component or said functional components (22, 24, 25, 26) and an electronic control circuit (28) for controlling the components themselves, where said control circuit (28) comprises communication means (28A) for exchange of signals in wireless mode with an electronic device (15, 30) for managing the robot (1).
